# EUROPEAN PATENT APPLICATION

(11) **EP 2 985 134 A1**
(43) Date of publication of application: **17.02.2016**
(21) Application number: 15020132.5
(22) Date of filing: 29.07.2015
(51) Int. Cl.: B29C 67/00, B33Y 10/00, B33Y 30/00, B33Y 40/00

(54) **PROCESS AND APPARATUS TO COLOUR A PART MANUFACTURED BY 3D PRINTING**

(30) Priority: 16.08.2014 PT 2014107847
(71) Applicant: BEEVC - Electronic Systems Lda., 3830-191 Ilhavo (PT)
(72) Inventor: Da Silva Moura, Miguel Augusto, 2070-085 Cartaxo (PT)

(57) **Abstract**

Disclosed herein is a process and a device to colour a part manufactured by using a 3D printing process of the "Fused Filament Fabrication" (FFF) or "Fused Deposition Modelling" (FDM) type, using UV ink dispensed by inkjet printing processes. Specifically, it consists on an upgrade for common 3D FFF printing machines that allows them to print coloured parts.

## Description

This invention discloses a process and an equipment to colour a part manufactured using a 3D printing method of the "Fused Filament Fabrication (FFF) or "Fused Deposition Modelling" (FDM) type. The relevant technical area is therefore 3D printing. In more detail, disclosed wherein is an upgrade to typical FFF 3D printing machines that allows the colouring of the part either as it is manufactured or by the end of the manufacturing process.

### State of the art

The state of the art includes several patents that deal with the colouring of parts manufactured by FFF 3D printing. Such a patent is US2013026683, disclosing an addictive manufacturing method in which the UV ink is imbibed in a polymeric matrix, which is cured along with the ink. This is a radically different process from FFF, since the part building material is deposited not in a viscous state, but in liquid state. This requires the formation of support structures, in ways not actually revealed on the document. An expert in 3D printing would not assume that colouring a FFF manufactured part is possible by reading this patent.

US2014134334 discloses a method for colouring FFF 3D printed parts that implies colouring the polymeric strand upstream or downstream of the extruder head. This is not the same as colouring the fabricated layer, as in the present invention, and is a technique known for giving very bad results. The concentration of pigments or other colouring means is very difficult to fine tune, the adhesion of the ink to the molten polymer is very bad, the dispersion is not homogeneous, with differences in ink intensity, the resolution is almost impossible to control, with the ink ending up in the wrong parts and the variable geometry of layers exposes different parts of the molten strand. This quality of these methods is simply not acceptable.

US2014088751 deals with a very similar process as US2014134334. These kinds of patents are abundant, and not a single 3D printer actually implements them, for the reason stated before.

WO2014039825 discloses using differently coloured materials to colour a part, which is a radically different approach to the problem. The amount of colours possible and the build quality are severely compromised using this kind of processes.

US2013328228 deals with mixing differently coloured filaments to achieve colouring of the part. The usual problems and difficulties of controlling the process, including mixing, correctness of colour, the size of the colour space and evacuating the extruder to change colours are evident.

### Detailed description

To better understand the invention, a small explanation of the FFF 3D printing process is required: a filament (usually some kind of plastic, for example, polylactic acid, PLA, or acrylate-butadiene-styrene, ABS) is mechanically forced into an extruding apparatus, where it is subjected to temperatures above its melting point, for crystalline polymers, and/or to a temperature that results in an adequate viscosity, for amorphous polymers, and it's the action of the still solid filament being fed into the extruding apparatus that pushes the molten tip through a nozzle. This nozzle extrudes very near the printing surface (usually at a distance of 20um to 300um), such surface that can be covered with an appropriate substrate (usually some kind of masking tape), and by moving both/either the table or/and the extruding apparatus in a horizontal plane, a certain amount of material is deposited with a specific shape. The extruding head usually incorporates a blower to rapidly cool the extruded material and solidify it in place. After each horizontal layer is fabricated, the extruder or the table are moved in a vertical direction and the fabrication of the following layer ensues, until the part is complete. Colour FFF 3D printing would imply either colouring the filament during or before melt, or painting the final part.

In spite of all the disclosed state-of-the-art, there are no FFF 3D printing solutions that imply a total freedom in colour choice. Most existing systems provide an option to colour an entire 3D printed layer at a time, giving rise to objects with vertically changing coloured full layers. The reason for the inexistence, on the market, of a fully working printer that can print coloured line segments freely in each layer is directly related to the fact that either the inking pigments being used do not adhere to plastic, and the colour can be easily smudged with simple manual manipulation of the part, making it a flawed product, or the colouring mechanics includes complicated mechanical mixing apparatuses for molten filaments of several colours, producing colour changes that imply the extrusion of great quantities of material before a colour change is effective (the extruded lines lengths are in the order of centimetres, which is in direct relation with the typical volume of molten material stored in a normal hot channel for these machines), rendering the colouring of line segments impossible.

Disclosed herein is the use of UV radiation curable ink on the printer, and the introduction of a radiation emission apparatus with the required wavelength. This ink can be applied using an inkjet system, with several advantages, disclosed ahead.

The justification for the disclosed colouring technique revolves around the fact that in the regular plastics used as building material in FFF 3D printers, the plastics chemical surface stability is such that most solvents are unable to penetrate the surface and fixate pigment on it. After the solvent evaporates, the pigments become deprived of any strong chemical or physical bond to the surface, and are easily removed from it. The disclosed invention solves this problem, due to the curable UV ink (referred just as UV ink from now on) polymerizing over the surface irregularities of the material deposited during the 3D printing process, ensuring that after the curing/polymerization of the ink the pigments stay physically bonded to the part, and chemically imbibed in the cured material. In addition, most of these inks are traditionally meant for inkjet printing, allowing for resolution on a scale of a few microns, and are many times ready for food contact, being innocuous for human beings, making this a revolutionary solution.

There are several ways to implement this invention, but, generically, it is required, besides a typical FFF extrusion head, to have an inkjet head, mounted in such a way as not to interfere with the extruder when fabricating the part layers and in an appropriate angle in relation to the extruded matter, depositing ink as the print is done or able to paint the part perimeter layer-by-layer. It is immediately consequential, that, in relation with other colouring systems, the one disclose herein allows for a substantial saving in ink, by applying it only to the external, visible, perimeters of the part.

In case that, depending on the vertical resolution of the 3D print, the distance between layers or the diameter of the extruded lines (the lines that make up a layer are extruded as flattened cylinders) is such that the ink in liquid state, due to its superficial tension, spreads over areas outside the evacuation point of the ink jet, becoming smudged and giving a bad visual impression, it is possible to deposit a primary colour, for example, white, that serves as a way to stop the later layer of ink to spread. It has been experimentally tested and proven that UV ink will not smudge when applied over already cured UV ink, meaning that the surface energy between cured/uncured ink is such that the droplets are stable, and also that UV ink, when applied directly on extruded matter (the case of the primary) will not spread over an interface of plastic/previously cured UV ink.

The entire process is computer controlled, with the numeric control codes for the movements of the extruder head and other axis derived in normal fashion from 3D geometry files using a slicing program, and the numeric control codes for the movement and activation of nozzles of the inkjet head or heads derived from the digital information concerning colour attached to the 3D model. In a non-limiting example, a known file format compatible with this process is AMF, Additive Manufacturing File-Format. Custom file formats can be also thought of by an expert in the field.

The curing system for the UV ink can be embodied in different forms, either as a radiation emission system connected to the inkjet head, or an independently moving system, or a general system for bathing the entire work surface in radiation. The later system would imply the implementation of a UV radiation filter for the fabrication cavity to protect the user from radiation hazards. It is expected that in the case of directed UV radiation on a small area, such protection would not be necessary, or the simple implementation of a shade between the user and the UV radiation emission and/or reflection points would be enough.

The detailed operation of such a system is as follows:
1. The extruder head deposits a layer of material.
2. The inkjet head, working on an appropriate vertical angle, follows the path formed from the starting points of adjacent outside normals to the layer's surface, at a predetermined distance. As it moves, the inkjet nozzles for several colours are actuated as needed.
3. The UV curing system is engaged. Either it bathes the general vicinity of the manufactured part, or is a more focused beam only affecting the recently painted area.
4. The extruder head deposits the next layer, and so on, until the part is finished.

It can be understood that some parts of the outer surface of the part may be hard to attain at a correct angle with a inkjet head fixed on a certain direction on its translational support. It is thus envisioned that the head itself could be rotated, so that another degree of liberty can be attained in the movement, allowing for the painting of any outside surface, no matter its orientation. The UV curing implement can also benefit from this kind of rotating support.

The inkjet head can function on a CMYK colour scheme or any other suitable, as any expert in colouring could envision. It can also work with single colour or arbitrary numbers of additional colours. In one embodiment, one colour is specifically used as a primary, for example, white, as explained above.

## Claims

1. Apparatus for colouring 3D prints fabricated with an extruding head **characterized by** being formed by an inkjet head and an UV curing implement.

2. Apparatus for colouring 3D prints fabricated with an extruding head according to claim 1, **characterized by** the inkjet head being mounted in such a way as to point to and permit the painting of the outside perimeter of the part.

3. Apparatus for colouring 3D prints fabricated with an extruding head according to claim 2, **characterized by** the inkjet head being mounted on a rotating fashion.

4. Apparatus for colouring 3D prints fabricated with an extruding head according to claim 3, **characterized by** the inkjet head working with a CMYK colour scheme.

5. Apparatus for colouring 3D prints fabricated with an extruding head according to claim 3, **characterized by** the inkjet head working with a single colour.

6. Apparatus for colouring 3D prints fabricated with an extruding head according to claim 3, **characterized by** the inkjet head working with a more than one colour, at will.

7. Apparatus for colouring 3D prints fabricated with an extruding head according to claim 3, **characterized by** the inkjet head working with a specific colour, besides others, used specifically as a primary layer.

8. Apparatus for colouring 3D prints fabricated with an extruding head according to claim 1, **characterized by** the UV curing implement being mounted in such a way as to point to and permit the curing of the outside perimeter of the part.

9. Apparatus for colouring 3D prints fabricated with an extruding head according to claim 8, **characterized by** the UV curing implement being mounted on a rotating fashion.

10. Apparatus for colouring 3D prints fabricated with an extruding head according to claim 1, **characterized by** the UV curing implement furnishing light to the entire print cavity.

11. Apparatus for colouring 3D prints fabricated with an extruding head according to claim 10, **characterized by** the implementation of a UV filter for the print cavity.

12. Method for colouring 3D prints fabricated with an extruding head **characterized by** the following steps:
- Building a 3D printed part layer with the extruder head;
- Using the inkjet head to deposit an optional layer of primary ink;
- Using the inkjet head to paint the outside perimeter of the layer according to the colour attributes of a model file, activating the necessary nozzles as needed to make the right combination of colours;
- The UV curing system is engaged until the UV ink is cured;
- The extruder head deposits the next layer, and so on, until the part is finished.

13. Method for colouring 3D prints fabricated with an extruding head **characterized by** the following steps:
- Building a 3D printed part with the extruder head;
- Using the inkjet head to deposit an optional layer of primary ink over the part;
- Using the inkjet head to paint the outside perimeter of the part according to the colour attributes of a model file, activating the necessary nozzles as needed to make the right combination of colours;
- The UV curing system is engaged until the UV ink is cured.

14. Use of UV ink **characterized by** colouring a FFF 3d printed part with said ink.

15. Use of UV ink curing system **characterized by** serving to cure a FFF 3d printed part where UV curable ink was dispensed.
